# EUROPÄISCHE PATENTANMELDUNG

(11) **EP 4 592 120 A1**
(43) Veröffentlichungstag der Anmeldung: **30.07.2025**
(21) Anmeldenummer: 25152499.7
(22) Anmeldetag: 17.01.2025
(51) Int. Cl.: B60K 17/356, B60K 1/00, B60K 1/02, F16H 3/66, F16H 48/05, B60K 17/04, B60K 17/36, F16H 48/08, F16H 48/10, F16H 48/24, F16H 57/00

(54) **ELEKTRISCHER ACHSANTRIEB UND ANTRIEBSANORDNUNG MIT SOLCH EINEM ACHSANTRIEB**

(30) Priorität: 24.01.2024 DE 102024200615
(71) Anmelder: ZF Friedrichshafen AG, 88046 Friedrichshafen (DE)
(72) Erfinder: Pfeffer, Andreas, 94234 Viechtach (DE); Reitinger, Franz, 4092 Esternberg (AT); Mühlbauer, Alexander, 94575 Windorf (DE)
(74) Vertreter: ZF Friedrichshafen AG

(57) **Zusammenfassung**

Die vorliegende Erfindung bezieht sich auf einen elektrischen Achsantrieb (1) für ein Fahrzeug mit einer ersten Achse (2) zum Anbringen von Rädern (6) und einer elektrischen Antriebseinrichtung (7; 7.1, 7.2) zum Antreiben der ersten Achse (2). Der elektrische Achsantrieb (1) umfasst ferner einen Abtrieb (14) zum mechanischen Anbinden einer zweiten Achse (2; 50) zum Anbringen von Rädern (6). Dabei ist der elektrische Achsantrieb (1) ausgebildet, um mit der elektrischen Antriebseinrichtung (7; 7.1, 7.2) der ersten Achse (2) auch die zweite Achse (2; 50) über den Abtrieb (14) anzutreiben.

## Beschreibung

### Technisches Gebiet

Die vorliegende Erfindung bezieht sich auf einen elektrischen Achsantrieb, auf eine elektrische Antriebsanordnung mit solch einem elektrischen Achsantrieb sowie auf ein Fahrzeug mit solch einer Antriebsanordnung.

### Stand der Technik

Im Rahmen der Elektrifizierung von Antriebsanordnungen für Fahrzeuge wurden elektrische Achsantriebe entwickelt, mit denen eine Fahrzeugachse antreibbar ist. Zum Bereitstellen eines Allradantriebs von Fahrzeugen ist es bekannt, jede der Fahrzeugachsen mit einem eigenen elektrischen Achsantrieb auszustatten, um so eine Allradfunktionalität bereitstellen zu können.

### Darstellung der Erfindung

Die vorliegende Erfindung bezieht sich auf einen elektrischen Achsantrieb für ein Fahrzeug. Bei dem Fahrzeug kann es sich um ein Nutzfahrzeug, beispielsweise einen Lastkraftwagen, handeln. Bei dem Fahrzeug kann es sich um ein Off-Highway- oder um ein On-Highway-Fahrzeug handeln. Beispielsweise handelt es sich bei dem Fahrzeug um ein Militärfahrzeug, wie einen Radpanzer. Der elektrische Achsantrieb weist eine erste Achse zum Antreiben von Rädern auf. Die Räder können mit der ersten Achse direkt und alternativ oder zusätzlich über eine oder mehrere Getriebestufen mechanisch wirkverbunden sein. Über die erste Achse kann den Rädern ein Drehmoment zum Vortrieb des Fahrzeugs zugeführt werden. Der elektrische Achsantrieb umfasst ferner eine Antriebseinrichtung zum Antreiben der ersten Achse. Die Antriebseinrichtung kann eine oder mehrere Antriebseinheiten, beispielsweise Elektromotoren, aufweisen. Die Antriebseinrichtung kann ausgebildet sein, um ein Drehmoment bereitzustellen, mit dem das Fahrzeug bestimmungsgemäß fortbewegt werden kann. So kann das Drehmoment der Antriebseinrichtung an die erste Achse und von dieser an die Räder zum Vortrieb des Fahrzeugs übertragen werden.

Der elektrische Achsantrieb kann dabei räumlich und funktional der ersten Achse zugeordnet sein. Beispielsweise kann der elektrische Achsantrieb koaxial zu der ersten Achse ausgebildet sein. Bei einer alternativen Ausführungsform ist der elektrische Achsantrieb achsparallel beabstandet zu der ersten Achse vorgesehen, der ersten Achse jedoch räumlich dennoch zugeordnet. Dies kann beispielsweise derart sein, dass der elektrische Achsantrieb näher an der ersten Achse als an sonstigen Achsen des Fahrzeugs angeordnet ist. Bei den Rädern kann es sich um Räder handeln, die unmittelbar mit dem Boden zum Fortbewegen des Fahrzeugs im Eingriff stehen. Alternativ kann es sich bei den Rädern auch um Räder handeln, die mit einem Endlosumlaufelement, beispielsweise einer Kette, im Eingriff stehen. Die Antriebseinrichtung kann quer zur Fahrzeugrichtung angeordnet sein, beispielsweise derart, dass ein Ausgang der Antriebseinrichtung achsparallel oder koaxial zu der ersten Achse angeordnet ist.

Darüber hinaus weist der elektrische Achsantrieb einen Abtrieb zum mechanischen Anbinden einer zweiten Achse auf. Bei dem Abtrieb kann es sich beispielsweise um ein Zahnrad handeln, das als Festrad ausgebildet sein kann. Beispielsweise ist das Zahnrad als Kegelrad ausgebildet. Alternativ kann der Abtrieb als anderes Maschinenelement ausgebildet sein, über welches ein Drehmoment an eine zweite Achse übertragen werden kann. Die zweite Achse kann gemäß den obigen Ausführungen im Zusammenhang mit der ersten Achse ausgebildet sein. Der Abtrieb kann in einer Ausführungsform ausgebildet sein, um an Maschinenelemente, die im Zusammenhang mit Allradsystemen für Verbrennungsmotoren herkömmlich verwendet werden, angebunden zu werden.

Dabei ist der elektrische Achsantrieb der vorliegenden Erfindung ausgebildet, um mit der elektrischen Antriebseinrichtung nicht nur die erste Achse, sondern auch die zweite Achse über den Abtrieb antreiben zu können. Der elektrische Achsantrieb kann dabei über den Abtrieb an die zweite Achse ein Drehmoment abgeben, das allein oder im Zusammenspiel mit einem Drehmoment einer weiteren Antriebseinrichtung zum Antreiben der zweiten Achse eingerichtet ist. Dabei kann der elektrische Achsantrieb das Drehmoment der Antriebseinrichtung an die erste und die zweite Achse gleich oder aber unterschiedlich verteilen. Beispielsweise kann ein größerer Teil des Drehmoments an die erste Achse und ein kleinerer Teil des Drehmoments an die zweite Achse übertragen werden. Der elektrische Achsantrieb kann eine Schalteinrichtung aufweisen, mit welcher die zweite Achse selektiv zu- oder abgeschaltet werden kann. Die zweite Achse kann dabei eine Achse sein, die für den Betrieb in Verbindung mit einem Verbrennungsmotor ausgebildet ist. So kann es sich bei der zweiten Achse beispielsweise um eine für Verbrennungsmotoren ausgelegte Achse handeln. Der Abtrieb des elektrischen Achsantriebs kann mit der zweiten Achse über eine Gelenkwelle, beispielsweise über eine für Verbrennungsmotoren ausgelegte Gelenkwelle, verbunden werden.

Im Rahmen der vorliegenden Erfindung wird ein elektrischer Achsantrieb bereitgestellt, mit dem auf einfache und kosteneffiziente Weise ein Allradantrieb eines Fahrzeugs, beispielsweise eines Nutzfahrzeugs, realisierbar ist. Soll beispielsweise ein herkömmlicher für Verbrennungsmotoren ausgelegter Allradantrieb elektrifiziert werden, so kann der elektrische Achsantrieb der vorliegenden Erfindung an einer der Achsen des Fahrzeugs vorgesehen und über dessen Abtrieb an eine weitere Achse des Fahrzeugs mechanisch angebunden werden. Die Anbindung an die weitere Achse kann dabei beispielsweise über bereits bestehende Komponenten erfolgen. Zur Elektrifizierung des Allrad-Fahrzeugs kann in einem Fall demnach lediglich das Austauschen von einer Achse mit dem elektrischen Achsantrieb der vorliegenden Erfindung erforderlich sein. Demnach kann auf einfache und kosteneffiziente Art und Weise ein Allradantrieb eines Fahrzeugs elektrifiziert werden. Auch eine nachträgliche Elektrifizierung eines Allradantriebs eines Fahrzeugs ist mit dem elektrischen Achsantrieb der vorliegenden Erfindung beispielsweise im Rahmen einer Retrofit-Lösung möglich.

Im Rahmen einer Ausführungsform weist die erste Achse einen ersten Achsabschnitt zum Anbringen eines ersten Rads und einen zweiten Achsabschnitt zum Anbringen eines zweiten Rads auf. Bei den Achsabschnitten kann es sich jeweils um Komponenten handeln, die aus einem oder mehreren drehfest miteinander verbundenen Bauteilen ausgebildet sein können. Mit jedem der Achsabschnitte kann ein Rad in der oben beschriebenen Art und Weise verbunden sein. Im Rahmen der Ausführungsform kann der elektrische Achsantrieb ferner ein mit dem ersten und zweiten Achsabschnitt mechanisch wirkverbundenes Querdifferential zum Drehzahlausgleich zwischen den Achsabschnitten aufweisen. Bei dem Querdifferential kann es sich um ein Differential in einer Kegelradbauweise handeln. Alternativ oder zusätzlich kann es sich bei dem Querdifferential um ein Differential in einer Planetenradbauweise handeln. Das Querdifferential kann koaxial zu dem ersten und zweiten Achsabschnitt vorgesehen sein. Handelt es sich bei dem Querdifferential um ein Kegelraddifferential, kann dieses einen Differentialkorb aufweisen, der zum Antreiben der Achsabschnitte und damit der mit diesen verbundenen Rädern mechanisch mit der elektrischen Antriebseinrichtung wirkverbunden sein kann. In dem Differentialkorb können zwei parallel zueinander angeordnete Kegelräder gelagert sein, die jeweils drehfest mit den Achsabschnitten verbunden sind. Die Kegelräder können jeweils mit einem Zwischenrad kämmen, um einen Drehzahlausgleich zwischen den Achsabschnitten zu ermöglichen. Die Achse kann ferner eine Differentialsperre aufweisen, mit der beispielsweise mindestens einer der Achsabschnitte drehfest selektiv mit dem Differentialkorb verbunden werden kann.

Im Rahmen einer Ausführungsform weist der elektrische Achsantrieb ein Getriebe mit mehreren Gängen zum Antreiben der ersten und zweiten Achse auf. Das Getriebe kann im Drehmomentübertragungspfad zwischen der elektrischen Antriebseinrichtung und dem Abtrieb vorgesehen sein. Das Getriebe kann koaxial zu der ersten Achse ausgebildet sein. Bei dem Getriebe kann es sich um ein Getriebe in Planeten- und alternativ oder zusätzlich in Stirnradbauweise handeln. Das Getriebe kann eine Schalteinrichtung, beispielsweise ein oder mehrere Schaltelemente, aufweisen, mit denen unterschiedliche Übersetzungsverhältnisse, also unterschiedliche Gänge, geschaltet werden können. Das Getriebe kann einen oder mehrere Gänge sowohl in Vorwärts- als auch in Rückwärtsrichtung bereitstellen. Die Antriebseinrichtung, das Getriebe und das oben beschriebene Querdifferential können allesamt in einem elektrischen Achsantrieb der vorliegenden Erfindung vorgesehen sein und in dieser oder einer anderen Reihenfolge in Richtung der ersten Achse hintereinander angeordnet sein. Durch das Vorsehen des Getriebes kann ein elektrischer Achsantrieb mit besonders kompakter Bauweise bereitgestellt werden, da das durch die elektrische Antriebseinrichtung bereitzustellende Drehzahlspektrum verkleinert werden kann. Der elektrische Achsantrieb kann dabei derart ausgebildet sein, dass die erste Achse und die zweite Achse mit dem gleichen oder aber mit unterschiedlichen Übersetzungsverhältnissen angetrieben werden.

Im Rahmen einer Ausführungsform weist die elektrische Antriebseinrichtung einen einzigen elektrischen Motor auf. Der einzige elektrische Motor kann einen Rotor und einen Stator aufweisen, die beide koaxial zu der ersten Achse angeordnet sein können. Im Rahmen dieser Ausführungsform kann ein besonders kompakter elektrischer Achsantrieb bereitgestellt werden. In einer alternativen Ausführungsform weist die elektrische Antriebseinrichtung mehrere elektrische Antriebsmotoren, beispielsweise zwei elektrische Antriebsmotoren, auf, die jeweils einen Rotor und einen Stator aufweisen können. Die mehreren Antriebsmotoren, beispielsweise die zwei elektrischen Antriebsmotoren, können jeweils koaxial zu der ersten Achse ausgebildet sein. Beispielsweise weisen die mehreren elektrischen Antriebsmotoren den gleichen Außendurchmesser auf, um so einen elektrischen Achsantrieb mit einer gleichmäßigen Außenkontur und demnach einer guten Integrierbarkeit in das Fahrzeug bereitzustellen. Der einzige elektrische Antriebsmotor beziehungsweise die mehreren elektrischen Antriebsmotoren können jeweils ausgebildet sein, um sowohl die erste Achse als auch die zweite Achse über den Abtrieb anzutreiben.

Weist der elektrische Achsantrieb einen einzigen elektrischen Antriebsmotor auf, so kann dieser in Richtung der ersten Achse vor beziehungsweise hinter einem Getriebe des elektrischen Achsantriebs angeordnet sein. Im Ergebnis kann so ein elektrischer Achsantrieb mit einer verhältnismäßig geringen radialen Ausdehnung bereitgestellt werden. Weist der elektrische Achsantrieb hingegen eine elektrische Antriebseinrichtung mit mehreren elektrischen Antriebsmotoren auf, so können diese radial außerhalb eines Getriebes des elektrischen Achsantriebs angeordnet sein, sich mit diesem Getriebe jedoch in Axialrichtung der ersten Achse überlappen. Im Ergebnis kann so ein elektrischer Achsantrieb mit besonders kompakter axialer Baulänge bereitgestellt werden.

Im Rahmen einer Ausführungsform weist der Achsantrieb einen weiteren Abtrieb zum mechanischen Anbinden einer dritten Achse zum Anbringen von Rädern auf.

Hinsichtlich der Ausbildung des weiteren Abtriebs sowie der dritten Achse wird auf die obigen Ausführungen im Zusammenhang mit dem Abtrieb und der ersten Achse verwiesen. In einer Ausführungsform werden der Abtrieb und der weitere Abtrieb durch zwei separate Elemente bereitgestellt. Alternativ kann jedoch auch ein einziges Element sowohl den Abtrieb als auch den weiteren Abtrieb ausbilden. Im Rahmen dieser Ausführungsform kann der elektrische Achsantrieb ausgebildet sein, um mit der elektrischen Antriebseinrichtung der ersten Achse auch die dritte Achse über den weiteren Abtrieb anzutreiben. So kann die elektrische Antriebseinrichtung ausgebildet sein, um sowohl die erste, die zweite als auch die dritte Achse anzutreiben. Bei der ersten Achse kann es sich beispielsweise um eine Hinterachse und bei der zweiten Achse um eine Vorderachse eines Fahrzeugs handeln. Bei der dritten Achse kann es sich beispielsweise um eine zweite Hinterachse handeln. Auch alternative Ausgestaltungen sind denkbar.

Im Rahmen einer Ausführungsform weist der elektrische Achsantrieb ein Längsdifferential zum Drehzahlausgleich zwischen der ersten Achse und der zweiten Achse auf. Das Längsdifferential kann ausgebildet sein, um es zu ermöglichen, dass die erste Achse und die zweite Achse mit unterschiedlichen Drehzahlen drehen. Darüber hinaus kann das Längsdifferential ausgebildet sein, um ein Drehmoment der elektrischen Antriebseinrichtung an die erste und die zweite Achse zu übertragen, beispielsweise auf die erste und die zweite Achse aufzuteilen. Wie oben beschrieben, kann mittels des Längsdifferentials dabei eine Aufteilung in gleiche oder unterschiedliche Teile auf die erste und die zweite Achse erfolgen. Das Längsdifferential kann koaxial zu der elektrischen Antriebseinrichtung und alternativ oder zusätzlich der ersten Achse angeordnet sein. Soll ein Drehmoment der elektrischen Antriebseinrichtung auf die erste und die zweite Achse mit unterschiedlichen Anteilen verteilt werden, kann es sich bei dem Längsdifferential um ein Planetenraddifferential handeln. Das Planetenraddifferential kann als Minus- oder Plus-Planetenradsatz ausgebildet sein. Das Planetenraddifferential kann einen oder mehrere Planetenradsätze aufweisen. In einer Ausführungsform weist das Planetenraddifferential einen einzigen als Minus-Planetenradsatz ausgebildeten Planetenradsatz auf. Das Planetenraddifferential kann eine Standübersetzung aufweisen, die es ermöglicht, ein Drehmoment der elektrischen Antriebseinrichtung mit unterschiedlichen Anteilen auf die erste und die zweite Achse zu verteilen.

Beispielsweise kann der elektrische Achsantrieb als ein Hinterachsenantrieb ausgebildet sein, während eine Vorderachse an den Abtrieb mechanisch angebunden sein kann. Über das als Planetenraddifferential ausgebildete Längsdifferential kann nun ein Drehmoment der elektrischen Antriebseinrichtung so auf die Hinterbeziehungsweise Vorderachse aufgeteilt werden, dass beispielsweise ein größerer Anteil auf die Hinterachse und ein kleinerer Anteil auf die Vorderachse entfällt. Alternativ oder zusätzlich kann das Längsdifferential ein Kegelraddifferential aufweisen, welches ein Drehmoment der elektrischen Antriebseinrichtung zu gleichen Teilen auf die erste und die zweite Achse aufteilen kann. Das Kegelraddifferential des Längsdifferentials kann koaxial zu der ersten Achse angeordnet sein. So kann ein elektrischer Achsantrieb mit einer besonders kompakten Bauart bereitgestellt werden.

Die vorliegende Erfindung bezieht sich ferner auf eine elektrische Antriebsanordnung mit einem elektrischen Achsantrieb gemäß einer der zuvor beschriebenen Ausführungsformen. Die elektrische Antriebsanordnung umfasst ferner eine zweite Achse, wobei die zweite Achse über die elektrische Antriebseinrichtung der ersten Achse und den Abtrieb antreibbar ist. Wie die erste Achse kann auch die zweite Achse ein Querdifferential gemäß den obigen Ausführungen aufweisen. Weist der elektrische Achsantrieb der ersten Achse ein Längsdifferential auf, so kann die zweite Achse starr, beispielsweise nicht schaltbar, an den Abtrieb des elektrischen Achsantriebs der ersten Achse angebunden sein. Weist der elektrische Achsantrieb der ersten Achse hingegen kein Längsdifferential auf, so kann die zweite Achse an den Abtrieb mittels einer Schalteinrichtung angebunden sein, um eine selektive Zu- oder Abschaltung der zweiten Achse zu ermöglichen.

In einer Ausführungsform weist eine elektrische Antriebsanordnung zwei elektrische Achsantriebe gemäß einer der zuvor beschriebenen Ausführungsformen auf. Bei den elektrischen Achsantrieben kann es sich dabei um Ausführungen handeln, die jeweils kein Längsdifferential aufweisen. Die Abtriebe der zwei elektrischen Achsantriebe können dabei in einen Drehmomentübertragungszustand gebracht werden, bei denen ein Drehmoment von dem einen zu dem anderen Abtrieb oder umgekehrt übertragen werden kann. Hierfür kann eine Schalteinrichtung vorgesehen sein, um eine mechanische Wirkverbindung zwischen den Abtrieben der elektrischen Achsantriebe selektiv herzustellen oder aufzulösen. Die elektrische Antriebsanordnung dieser Ausführungsform kann dabei derart ausgebildet sein, dass etwaige Drehzahlunterschiede zwischen der ersten und der zweiten Achse durch die eigenen elektrischen Antriebseinrichtungen der jeweiligen Achsen ausgeglichen werden können. Darüber hinaus bezieht sich die vorliegende Erfindung auf ein Fahrzeug mit einer elektrischen Antriebsanordnung gemäß einer der zuvor beschriebenen Ausführungsformen. Hinsichtlich der Ausgestaltungen und Vorteile der einzelnen Merkmale wird auf die obigen Ausführungen im Zusammenhang mit dem elektrischen Achsantrieb verwiesen.

### Kurze Beschreibung der Figuren

Figuren 1A bis 1C zeigen elektrische Achsantriebe für ein Fahrzeug mit einem einzigen elektrischen Antriebsmotor gemäß Ausführungsformen der vorliegenden Erfindung.
Figuren 2A bis 2C zeigen elektrische Achsantriebe mit zwei elektrischen Antriebsmotoren gemäß Ausführungsformen der vorliegenden Erfindung.
Figuren 3A bis 3C zeigen elektrische Antriebsanordnungen mit zwei Achsen und mindestens einem elektrischen Achsantrieb der Figuren 1A bis 2C gemäß Ausführungsformen der vorliegenden Erfindung.
Figuren 4A bis 4D zeigen elektrische Antriebsanordnungen mit drei Achsen und mindestens einem elektrischen Achsantrieb der Figuren 1A bis 2C gemäß Ausführungsformen der vorliegenden Erfindung.
Figuren 5A bis 5C zeigen elektrische Antriebsanordnungen mit zwei Hinterachsen und mindestens einem elektrischen Achsantrieb der Figuren 1A bis 2C gemäß Ausführungsformen der vorliegenden Erfindung.

### Detaillierte Beschreibung von Ausführungsformen

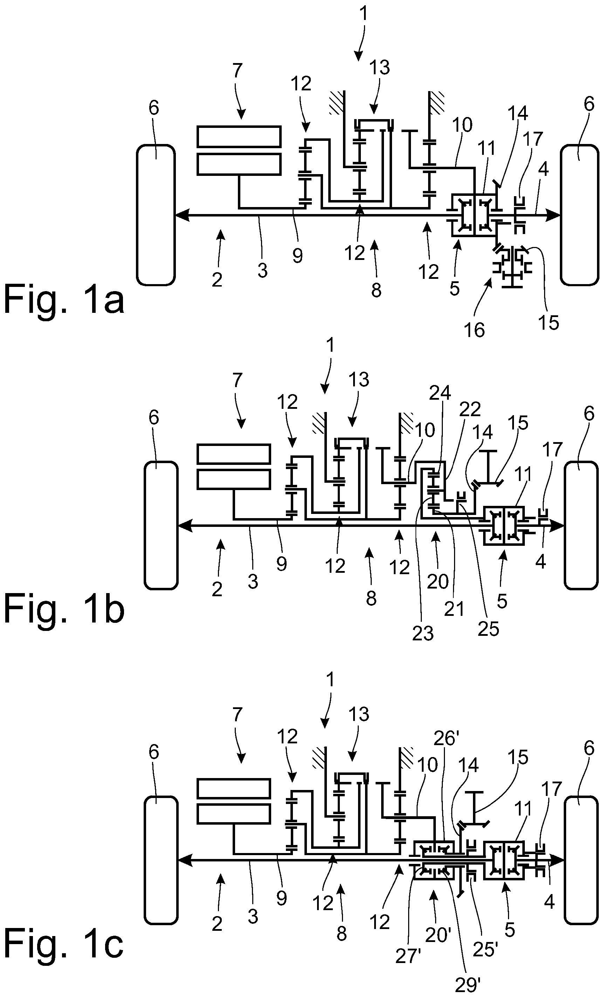

Figur 1A zeigt einen elektrischen Achsantrieb 1 für ein Fahrzeug gemäß einer Ausführungsform der vorliegenden Erfindung. Der Achsantrieb 1 umfasst eine Achse 2 mit einem ersten Achsabschnitt 3, einem zweiten Achsabschnitt 4 und einem Querdifferential 5. An dem ersten Achsabschnitt 3 und an dem zweiten Achsabschnitt 4 ist jeweils ein Rad 6 drehfest angebracht. Das Querdifferential 5 ist ausgebildet, um Drehzahlunterschiede zwischen dem ersten Achsabschnitt 3 und dem zweiten Achsabschnitt 4 ausgleichen zu können. In der vorliegenden Ausführungsform ist das Querdifferential 5 als Kegelraddifferential ausgebildet. Das Querdifferential 5 kann dabei eine Differentialsperre 17 aufweisen, mittels welcher ein Differentialkorb 11 des Querdifferentials 5 selektiv drehfest mit dem zweiten Achsabschnitt 4 verbindbar ist.

Darüber hinaus weist der elektrische Achsantrieb 1 eine elektrische Antriebseinrichtung 7 auf, die vorliegend einen einzigen elektrischen Motor aufweist. Die elektrische Antriebseinrichtung 7 ist koaxial zur Achse 2 und in der vorliegenden Ausführungsform radial außerhalb des ersten Achsabschnitts 3 vorgesehen. Die elektrische Antriebseinrichtung 7 ist mit einer nicht gezeigten Batterie elektrisch verbunden, um ein Antriebsmoment zum Antreiben der Achse 2 bereitzustellen. In der vorliegenden Ausführungsform ist die elektrische Antriebseinrichtung 7 mit einem Getriebe 8 mechanisch wirkverbunden, vorliegend drehfest verbunden, das einen Eingang 9 und einen Ausgang 10 aufweist. Der Getriebeeingang 9 ist drehfest mit der elektrischen Antriebseinrichtung 7 verbunden. Der Getriebeausgang 10 ist drehfest mit dem Querdifferential 5, genauer gesagt dem Differentialkorb 11 des Querdifferentials 5, verbunden. Demnach wird ein über den Getriebeausgang 10 bereitgestelltes Drehmoment an den Differentialkorb 11 des Querdifferentials 5 übertragen. Der Differentialkorb 11 überträgt nun das Drehmoment an die Achsabschnitte 3, 4 und hierüber an die Räder 6 zum Vortrieb des Fahrzeugs. In dem Differentialkorb 11 sind mehrere Kegelräder miteinander in Eingriff gelagert, über welche ein Drehzahlausgleich zwischen dem ersten Achsabschnitt 3 und dem zweiten Achsabschnitt 4 möglich ist.

Das Getriebe 8 ist in der vorliegenden Ausführungsform als Planetengetriebe mit drei Planetenradsätzen 12 und einer Schalteinrichtung 13 mit mehreren Schaltelementen zum Schalten unterschiedlicher Gänge ausgebildet. Die drei Planetenradsätze 12 sowie die Schalteinrichtung 13 sind so mechanisch miteinander verbunden, dass über die Schalteinrichtung 13 unterschiedliche Gänge mit voneinander verschiedenen Übersetzungsverhältnissen zwischen dem Getriebeeingang 9 und dem Getriebeausgang 10 geschaltet werden können. Beispielsweise können mit dem Getriebe 8 drei unterschiedliche Gänge geschaltet werden. Das Getriebe 8 ist in der vorliegenden Ausführungsform koaxial zu der Achse 2 und in Axialrichtung der Achse 2 zwischen der elektrischen Antriebseinrichtung 7 und dem Querdifferential 5 vorgesehen.

Darüber hinaus umfasst der elektrische Achsantrieb 1 einen Abtrieb 14 zum mechanischen Anbinden einer zweiten in Figur 1A nicht gezeigten Achse. Die zweite Achse kann analog zu der ersten Achse 2 ausgebildet sein und demnach ebenfalls einen ersten Achsabschnitt 3, einen zweiten Achsabschnitt 4 und ein mit diesen mechanisch wirkverbundenes Querdifferential 5 aufweisen. Der Abtrieb 14 ist in der vorliegenden Ausführungsform als Festrad ausgebildet, das auf dem Differentialkorb 11 des Querdifferentials 5 permanent drehfest vorgesehen ist. In der vorliegenden Ausführungsform ist das Festrad 14 dabei als Tellerrad ausgebildet. Mit dem Tellerrad 14 kann ein Kegelritzel 15 mechanisch eingreifen, um ein Drehmoment der elektrische Antriebseinrichtung 7 an die nicht gezeigte zweite Achse übertragen zu können. Dabei kann eine Schalteinrichtung 16 vorgesehen sein, die zum Herstellen der mechanischen Wirkverbindung zwischen dem Tellerrad 14 und der nicht gezeigten zweiten Achse betätigt werden muss. Ist die Schalteinrichtung 16 beispielsweise eingelegt, so kann eine mechanische Wirkverbindung zwischen dem Tellerrad 14 und der nicht gezeigten zweiten Achse hergestellt sein. Ist die Schalteinrichtung 16 hingegen geöffnet, so kann kein Drehmoment von dem Tellerrad 14 an die zweite nicht gezeigte Achse übertragen werden.

Der elektrische Achsantrieb 1 der in Figur 1A gezeigten Ausführungsform ist demnach ausgebildet, um ein Drehmoment der elektrischen Antriebseinrichtung 7 über das Getriebe 8 mit unterschiedlichen Übersetzungsverhältnissen sowohl an die erste Achse 2 als auch über den Abtrieb 14 an eine nicht gezeigte zweite Achse zu übertragen. Demnach kann mit dem elektrischen Achsantrieb 1 der vorliegenden Ausführungsform beispielsweise auf einfache und kosteneffiziente Weise ein elektrifizierter Allradantrieb für ein Fahrzeug bereitgestellt werden.

Figur 1B zeigt einen elektrischen Achsantrieb 1 für ein Fahrzeug gemäß einer weiteren Ausführungsform der vorliegenden Erfindung. Der Achsantrieb 1 der Ausführungsform von Figur 1B entspricht dem Achsantrieb 1 der Ausführungsform von Figur 1A mit Ausnahme der im Folgenden beschriebenen Unterschiede. Gleiche Bezugszeichen kennzeichnen entsprechende Bauteile. Im Unterschied zu der Ausführungsform von Figur 1A weist der elektrische Achsantrieb 1 der Ausführungsform von Figur 1B ein Längsdifferential 20 auf, das mechanisch mit dem Getriebeausgang 10, dem Querdifferential 5 und dem Abtrieb 14 des elektrischen Achsantriebs 1 wirkverbunden ist. Das Längsdifferential 20 ist koaxial zur Achse 2 vorgesehen und als Planetenraddifferential ausgebildet. Das Längsdifferential 20 der vorliegenden Ausführungsform ist ferner ausgebildet, um ein Drehmoment des Getriebeausgangs 10 auf die erste Achse 2 und die weitere mit dem Abtrieb 14 mechanisch gekoppelte und nicht gezeigte Achse aufzuteilen. Dabei ist das Planetenraddifferential 20 der vorliegenden Ausführungsform ausgebildet, um das Drehmoment am Getriebeausgang 10 ungleich zwischen der ersten Achse 2 und der weiteren nicht gezeigten Achse aufzuteilen. In anderen Worten wird das Drehmoment des Getriebeausgangs 10 über das Planetenraddifferential 20 dieser Ausführungsform so aufgeteilt, dass eine der Achsen ein höheres Drehmoment als die andere der Achsen erhält.

Das in Planetenbauweise ausgebildete Längsdifferential 20 weist einen einzigen Planetenradsatz mit einem Sonnenrad 21, einem Planetenträger 22 mit darauf drehbar gelagerten Planetenrädern 23 und einem Hohlrad 24 auf. Das Sonnenrad 21 des Längsdifferentials 20 ist permanent drehfest mit dem als Tellerrad ausgebildeten Abtrieb 14 verbunden. Das Hohlrad 24 des Längsdifferentials 20 ist permanent drehfest mit dem Differentialkorb 11 des Querdifferentials 5 der ersten Achse 2 verbunden. Ferner ist der Planetenträger 22 des Längsdifferentials 20 permanent drehfest mit dem Getriebeausgang 10 des Getriebes 8 verbunden. Ein über den Planetenträger 22 in das Längsdifferential 20 eingeleitetes Drehmoment des Getriebeausgangs 10 wird durch das Längsdifferential 20 auf das Sonnenrad 21 und das Hohlrad 24 und damit auf das Querdifferential 5 und den Abtrieb 14 aufgeteilt. Die Aufteilung des Drehmoments auf diese beiden Komponenten erfolgt dabei im Lichte der durch das Längsdifferential 20 bereitgestellten Standübersetzung. Ferner ist das Längsdifferential 20 ausgebildet, um Drehzahlunterschiede zwischen der ersten Achse 2 und einer nicht gezeigten mit dem Abtrieb 14 mechanisch wirkverbundenen zweiten Achse ausgleichen zu können. Das Längsdifferential 20 weist ferner eine Differentialsperre 25 auf, über welche der Planetenträger 22 mit dem Sonnenrad 21 des Längsdifferentials 20 selektiv drehfest verbunden werden kann, um den Planetenradsatz zu verblocken.

Figur 1C zeigt einen elektrischen Achsantrieb 1 gemäß einer weiteren Ausführungsform der vorliegenden Erfindung. Der elektrische Achsantrieb 1 gemäß der Ausführungsform von Figur 1C entspricht dem elektrischen Achsantrieb aus Figur 1B mit Ausnahme der im Folgenden beschriebenen Unterschiede. Gleiche Bezugszeichen kennzeichnen entsprechende Bauteile. Im Unterschied zu dem Achsantrieb 1 aus Figur 1B weist der Achsantrieb 1 aus Figur 1C ein Längsdifferential 20' auf, welches als Kegelraddifferential ausgebildet ist. Das Kegelraddifferential 20' ist ausgebildet, um ein Drehmoment des Getriebeausgangs 10 auf die erste Achse 2 und über den Abtrieb 14 auf eine weitere nicht gezeigte zweite Achse aufzuteilen. Dabei wird das Drehmoment des Getriebeausgangs 10 durch das als Kegelraddifferential ausgebildete Längsdifferential 20' im Wesentlichen in gleichen Teilen auf die erste Achse 2 und die zweite Achse aufgeteilt.

Das Kegelraddifferential 20' umfasst einen Differentialkorb 26', der permanent drehfest mit dem Getriebeausgang 10 des Getriebes 8 verbunden ist. Ferner umfasst das Kegelraddifferential 20' ein erstes koaxial zur ersten Achse 2 angeordnetes Kegelrad 27', das permanent drehfest mit dem Differentialkorb 11 des Querdifferentials 5 verbunden ist. Ein weiteres koaxial zur Achse 2 angeordnetes Kegelrad 28' ist permanent drehfest mit dem als Tellerrad ausgebildeten Abtrieb 14 verbunden. Die Kegelräder 27' und 28' sind über ein als Kegelrad ausgebildetes Zwischenrad 29' in mechanischer Wirkverbindung. Demnach kann über das Kegelraddifferential 20' ein Drehzahlunterschied zwischen der ersten Achse 2 und der nicht gezeigten zweiten Achse ausgeglichen werden. Entsprechend der Ausführungsform von Figur 1B umfasst das Längsdifferential 20' der Ausführungsform von Figur 1C eine Differentialsperre 25'.

Über die Differentialsperre 25' kann selektiv der Abtrieb 14 mit dem Differentialkorb 11 des Querdifferentials 5 drehfest verbunden werden.

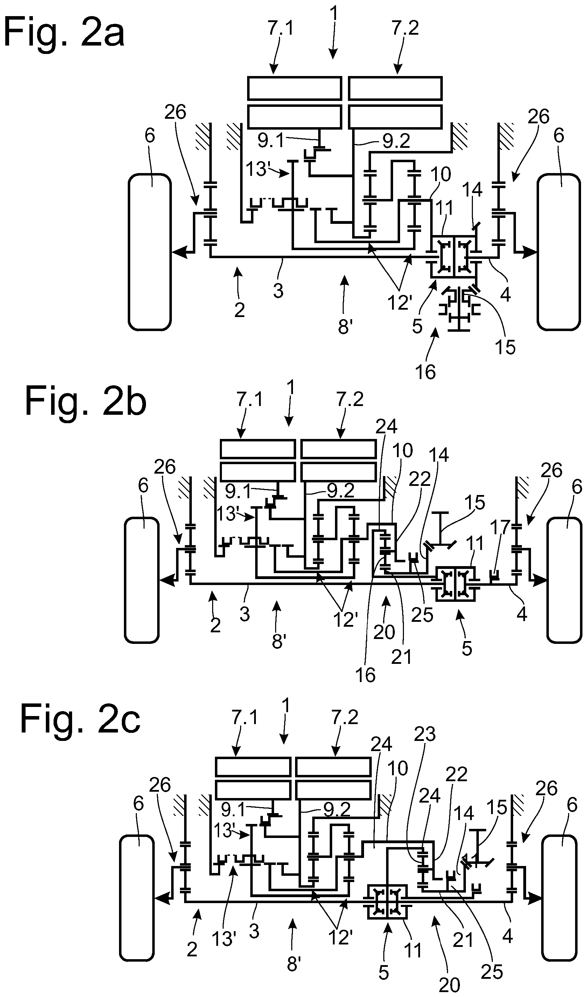

Figur 2A zeigt einen elektrischen Achsantrieb 1 mit zwei Elektromotoren 7.1 und 7.2 gemäß einer Ausführungsform der vorliegenden Erfindung. Der elektrische Achsantrieb 1 der Ausführungsform von Figur 2A ist gemäß dem elektrischen Achsantrieb 1 der Ausführungsform von Figur 1A mit Ausnahme der im Folgenden beschriebenen Unterschiede ausgebildet. Gleiche Bezugszeichen kennzeichnen entsprechende Bauteile. Im Unterschied zu der Ausführungsform von Figur 1A weist die Ausführungsform von Figur 2A eine elektrische Antriebseinrichtung mit zwei Elektromotoren 7.1 und 7.2 auf. Das Getriebe 8' der Ausführungsform von Figur 2A weist zwei Getriebeeingänge 9.1 und 9.2 auf, mit denen jeweils einer der Elektromotoren 7.1 und 7.2 mechanisch verbunden ist.

Darüber hinaus weist das Getriebe 8' der Ausführungsform von Figur 2A eine andere Ausgestaltung als das Getriebe 8 der Ausführungsform von Figur 1A auf. Wie das Getriebe der Ausführungsform von Figur 1A weist das Getriebe 8' der Ausführungsform von Figur 2A jedoch ebenfalls mehrere Planetenradsätze, vorliegend zwei Planetenradsätze 12', sowie eine Schalteinrichtung 13' mit mehreren Schaltelementen auf, die allesamt koaxial zur ersten Achse 2 ausgebildet sind. Über die Schaltelemente der Schalteinrichtung 13' können unterschiedliche Übersetzungsverhältnisse zwischen den Getriebeeingängen 9.1 und 9.2 und dem Getriebeausgang 10 geschaltet werden, wie es auch bei dem Getriebe 8 der Ausführungsform von Figur 1A möglich ist. Dabei weist der elektrische Achsantrieb 1 der Ausführungsform von Figur 2A ein höheres Leistungsniveau auf, welches vor allem durch das Vorsehen von zwei Elektromotoren 7.1 und 7.2 bereitgestellt wird. Darüber hinaus umfasst der elektrische Achsantrieb 1 der Ausführungsform von Figur 2A zwischen den Achsabschnitten 2 und 4 und den Rädern 6 jeweils eine Planetenstufe 26 zum Bereitstellen einer zusätzlichen Übersetzung.

Der elektrische Achsantrieb 1 der Ausführungsform von Figur 2B entspricht dem elektrischen Achsantrieb 1 der Ausführungsform von Figur 2A mit Ausnahme der im Folgenden beschriebenen Unterschiede. Gleiche Bezugszeichen kennzeichnen entsprechende Bauteile. Im Unterschied zu der Ausführungsform von Figur 2A ist der Getriebeausgang 10 in der Ausführungsform von Figur 2B nicht drehfest mit dem Differentialkorb 11 des Querdifferentials 5, sondern mit einem als Planetenraddifferential ausgebildeten Längsdifferential 20 verbunden. So wurde es auch im Zusammenhang mit der Ausführungsform von Figur 1B beschrieben. Das Planetenraddifferential 20 zum Längsausgleich der Ausführungsform von Figur 2B ist entsprechend der Ausgestaltung von der Ausführungsform von Figur 1B an den Getriebeausgang 10, das Querdifferential 5 und den Abtrieb 14 mechanisch angebunden. Es wird diesbezüglich auf die Ausführungen im Zusammenhang mit der Ausführungsform von Figur 1B verwiesen.

In den Ausführungsformen von Figuren 1B und 2B sind das als Planetenraddifferential ausgebildete Längsdifferential 20, der Abtrieb 14 und das Querdifferential 5 in dieser Reihenfolge in Richtung der ersten Achse 2 vom linken Achsabschnitt 3 zum rechten Achsabschnitt 4 hintereinander angeordnet. In der Ausführungsform von Figur 2C ist in derselben Richtung das Querdifferential 5 vor dem als Planetendifferential ausgebildeten Längsdifferential 20 vorgesehen, welches wiederum vor dem Abtrieb 14 angeordnet ist. Im Übrigen ist die Ausführungsform von Figur 2C gemäß der Ausführungsform von Figur 2B ausgebildet.

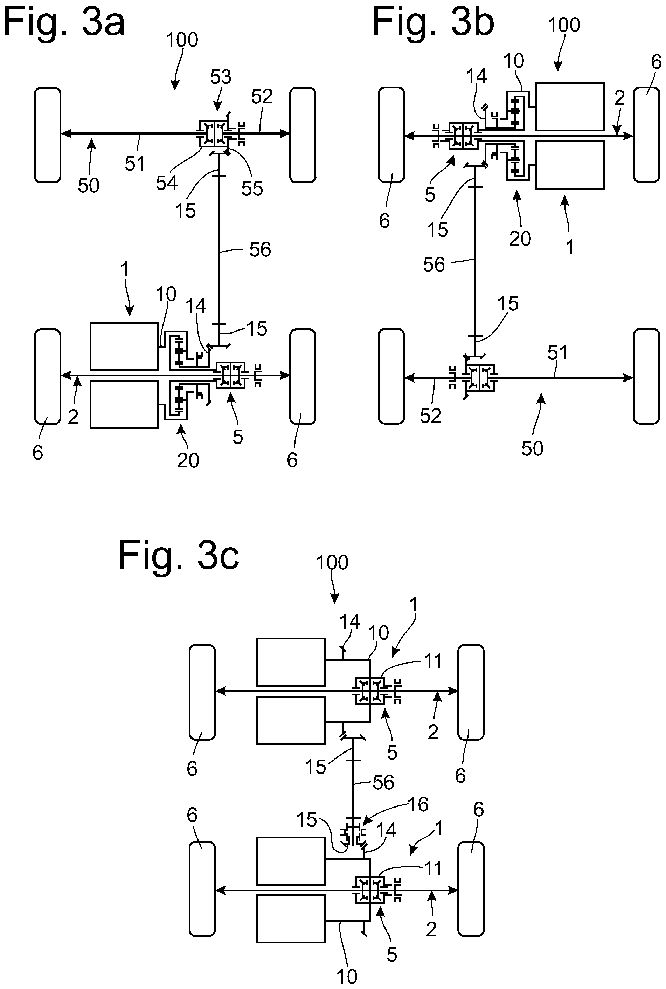

Figur 3A zeigt eine elektrische Antriebsanordnung 100 gemäß einer Ausführungsform der vorliegenden Erfindung. Die elektrische Antriebsanordnung 100 umfasst einen elektrischen Achsantrieb 1 gemäß der Ausführungsform von Figur 1B oder der Ausführungsform von Figur 2B mit einem als Planetendifferential ausgebildeten Längsdifferential 20. Die elektrische Antriebseinrichtung 7 beziehungsweise Elektromotoren 7.1 und 7.2 sowie das Getriebe 8 beziehungsweise 8' sind in der elektrischen Antriebsanordnung 100 gemäß Figur 3A abstrahiert und demnach nicht im Detail dargestellt. Gezeigt ist jedoch der Getriebeausgang 10, der permanent drehfest mit dem als Planetenraddifferential ausgebildeten Längsdifferential 20 verbunden ist. Der elektrische Achsantrieb 1 umfasst eine erste Achse 2, die vorliegend als Hinterachse ausgebildet ist. Darüber hinaus umfasst die elektrische Antriebsanordnung 100 eine zweite Achse 50, die vorliegend als Vorderachse ausgebildet ist. Die Vorderachse 50 ist entsprechend der Hinterachse 2 mit einem ersten Achsabschnitt 51, einem zweiten Achsabschnitt 52 und einem Querdifferential 53 ausgebildet. Über das Querdifferential 53 können Drehzahlunterschiede zwischen dem ersten und zweiten Achsabschnitt 51, 52 ausgeglichen werden. Auf dem Differentialkorb 54 des Querdifferentials 53 ist ein als Tellerrad ausgebildetes Festrad 55 vorgesehen, das mit dem Abtrieb 14 des elektrischen Achsantriebs 1 in mechanischer Wirkverbindung steht. In der vorliegenden Ausführungsform ist dafür eine Welle 56 vorgesehen, an deren Enden jeweils Kegelräder 15 drehfest angebracht sind, die mit den Festrädern 14 und 55 kämmen. Über das als Planetenraddifferential ausgebildete Längsdifferential 20 kann ein Drehzahlausgleich zwischen der Hinterachse 2 und der Vorderachse 50 vorgenommen werden.

Figur 3B zeigt eine Ausführungsform einer Antriebsanordnung 100, die gemäß der Antriebsanordnung 100 der Ausführungsform von Figur 3A mit Ausnahme des im Folgenden beschriebenen Unterschieds ausgebildet ist. Im Unterschied zu der Antriebsanordnung 100 der Ausführungsform von Figur 3A ist die erste Achse 2 des elektrischen Achsantriebs 1 als Vorderachse ausgebildet. Die zweite Achse 50 ist als Hinterachse ausgebildet. Im Übrigen ist die Antriebsanordnung 100 der Ausführungsform von Figur 3B entsprechend der Antriebsanordnung 100 der Ausführungsform von Figur 3A ausgebildet.

Figur 3C zeigt eine Antriebsanordnung 100 gemäß einer Ausführungsform der vorliegenden Erfindung. Die Antriebsanordnung 100 umfasst einen ersten elektrischen Achsantrieb 1 mit einer ersten elektrischen Achse 2, der gemäß einer der Ausführungsformen von Figuren 1A und 2A ausgebildet ist. Folglich ist der Getriebeausgang 10 permanent drehfest mit dem Differentialkorb 11 des Querdifferentials 5 verbunden. Ein Längsdifferential ist in dem ersten elektrischen Achsantrieb 1 der Ausführungsform von Figur 3C nicht vorgesehen. Die Achse 2 des ersten elektrischen Achsantriebs 1 ist in der vorliegenden Ausführungsform als Vorderachse ausgebildet. Darüber hinaus umfasst die elektrische Antriebsanordnung 100 der Ausführungsform von Figur 3C einen zweiten elektrischen Achsantrieb 1 mit einer zweiten Achse 2, die in der vorliegenden Ausführungsform als Hinterachse ausgebildet ist. Der zweite elektrische Achsantrieb 1 ist gemäß dem ersten elektrischen Achsantrieb 1 für die Vorderachse 2 ausgebildet. Die jeweils als Festrad ausgebildeten

Abtriebe 14 der elektrischen Achsantriebe 1 für die Vorder- und Hinterachse sind in der vorliegenden Ausführungsform dabei mechanisch wirkverbindbar. Hierfür ist eine Schalteinrichtung 16 vorgesehen, wie sie in Verbindung mit der Ausführungsform von Figur 1A beschrieben wurde. Über die Schalteinrichtung 16 sind zwei mit den Abtrieben 14 jeweils kämmende Kegelradritzel 15 über eine Welle 56 drehfest miteinander verbindbar. So kann ein Drehmoment von dem Achsantrieb 1 für die Vorderachse 2 an den Achsantrieb 1 für die Hinterachse und vice versa übertragen werden. Die Ausführungsform der Antriebseinrichtung 100 aus Figur 3C weist dabei gerade kein Längsdifferential auf, da Drehzahlunterschiede zwischen der Vorder- und Hinterachse durch die jeweiligen Antriebseinrichtungen der Achsantriebe 1 ausgeglichen werden können.

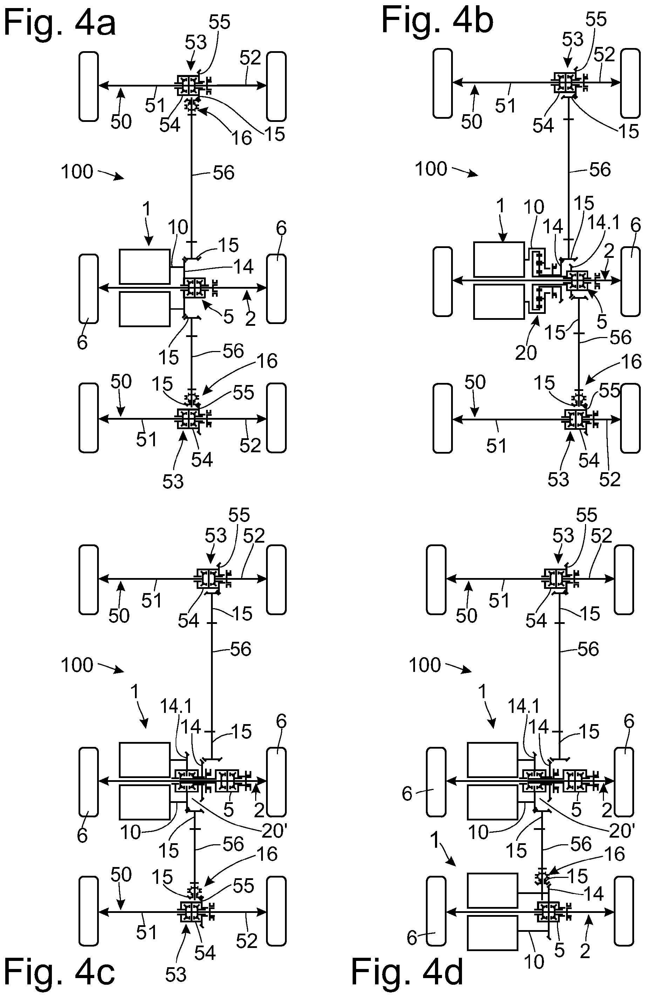

Figur 4A zeigt eine elektrische Antriebsanordnung 100 mit einem elektrischen Achsantrieb 1, der gemäß einer der Ausführungsformen von Figuren 1A und 2A ausgebildet ist. Bei der Achse 2 des elektrischen Achsantriebs 1 handelt es sich um eine erste Hinterachse. Darüber hinaus umfasst die elektrische Antriebsanordnung 100 eine zweite Hinterachse 50 sowie eine Vorderachse 50, die jeweils gemäß der Vorderachse 50 der Ausführungsform von Figur 3A ausgebildet sind. Die Festräder 55 der Querdifferentiale 54 von Vorderachse 50 und zweiter Hinterachse 50 kämmen jeweils mit Kegelritzeln 15, die jeweils über eine Schalteinrichtung 16, wie sie oben beschrieben ist, über eine Welle 56 drehfest verbunden werden können. Die Kegelritzel 15 kämmen mit dem Abtrieb 14. Demnach kann ein Drehmoment des elektrischen Achsantriebs 1 über den Abtrieb 14 neben der ersten Hinterachse 2 sowohl an die zweite Hinterachse 50 als auch an die Vorderachse 50 übertragen werden. Der Abtrieb 14 ist demnach ausgebildet, um eine zweite Achse, vorliegend die Vorderachse 50, anzutreiben. Darüber hinaus bildet der Abtrieb 14 einen weiteren Abtrieb zum Antreiben einer dritten Achse 50, vorliegend der zweiten Hinterachse, aus.

Figur 4B zeigt eine Antriebsanordnung 100 gemäß einer weiteren Ausführungsform der vorliegenden Erfindung. Die Antriebsanordnung 100 gemäß Figur 4B ist entsprechend der Antriebsanordnung 100 von Figur 4A mit Ausnahme der im Folgenden beschriebenen Unterschiede ausgebildet. Im Unterschied zu der Antriebsanordnung 100 von Figur 4A ist der elektrische Achsantrieb 1 der ersten Hinterachse 2 in der Ausführungsform von Figur 4B mit einem als Planetenraddifferential ausgebildeten Längsdifferential 20 ausgebildet. Die Ausbildung erfolgt dabei entsprechend der Ausführungsform von Figur 1B oder der Ausführungsform von Figur 2B. Dabei ist der Abtrieb 14 des elektrischen Achsantriebs 1 über die Kegelritzel 15 und die Welle 56 ohne Schalteinrichtung mit dem Querdifferential 53 der zweiten Achse 50, vorliegend der Vorderachse, mechanisch wirkverbunden. Das Querdifferential 5 der ersten Hinterachse 2 bildet in Form eines auf diesem vorgesehenen Festrads einen weiteren Abtrieb 14.1 aus. Mit dem weiteren Abtrieb 14.1 ist die dritte Achse 50, vorliegend die zweite Hinterachse, entsprechend der in Verbindung mit der Ausführungsform von Figur 4A beschriebenen Ausgestaltung mechanisch über eine Schalteinrichtung 16 wirkverbindbar. Folglich kann im Rahmen dieser Ausführungsform die zweite Hinterachse 50 über die Schalteinrichtung 16 zugeschaltet werden, wobei ein Drehzahlausgleich zwischen der ersten und zweiten Hinterachse 2, 50 nicht erfolgen kann. Aufgrund des Längsdifferentials 20 kann hingegen ein Drehzahlausgleich zwischen der Vorderachse 50 und der ersten Hinterachse 2 erfolgen. Der elektrische Achsantrieb 1 der ersten Hinterachse 2 kann im Rahmen dieser Ausführungsform jedoch ein Drehmoment an beide Hinterachsen 2, 50 und auch an die Vorderachse 50 übertragen.

Figur 4C zeigt eine Antriebsanordnung 100 gemäß einer weiteren Ausführungsform der vorliegenden Erfindung. Die Antriebsanordnung 100 ist gemäß der Antriebsanordnung 100 aus Figur 4B mit Ausnahme der im Folgenden beschriebenen Unterschiede ausgebildet. Im Unterschied zu der Antriebsanordnung 100 aus Figur 4B ist der elektrische Achsantrieb 1 der ersten Hinterachse 2 in der Ausführungsform von Figur 4C gemäß einer der Ausführungsformen von Figur 1C und 2C ausgebildet. Demnach umfasst der elektrische Achsantrieb 1 der Ausführungsform von Figur 4C ein als Kegelraddifferential ausgebildetes Längsdifferential 20' zum Drehzahlausgleich zwischen der als erste Hinterachse ausgebildeten ersten Achse 2 und der als Vorderachse ausgebildeten zweiten Achse 50. Auf dem Getriebeausgang 10 ist ferner ein als Festrad vorgesehener weiterer Abtrieb 14.1 ausgebildet, über welchen gemäß den Ausführungen im Zusammenhang mit der Ausführungsform von Figur 4B eine dritte Achse 50, vorliegend die zweite Hinterachse, über eine Schalteinrichtung 16 selektiv zugeschaltet werden kann.

Figur 4D zeigt eine weitere Ausführungsform einer elektrischen Antriebsanordnung 100 gemäß einer Ausführungsform der vorliegenden Erfindung. Die Antriebsanordnung 100 der Ausführungsform von Figur 4D entspricht der Antriebsanordnung 100 der Ausführungsform von Figur 4C mit Ausnahme der im Folgenden beschriebenen Unterschiede. Im Unterschied zu der Antriebsanordnung 100 von Figur 4C ist in der Antriebsanordnung 100 von Figur 4D die dritte Achse, vorliegend die zweite Hinterachse 2, mit einem eigenen elektrischen Achsantrieb 1 ausgebildet. In der vorliegenden Ausführungsform ist der elektrische Achsantrieb 1 der zweiten Hinterachse 2 gemäß der Ausführungsform von Figur 1A oder der Ausführungsform von Figur 2A ausgebildet und weist demnach kein Längsdifferential 20 beziehungsweise 20' auf. Der Getriebeausgang 10 des elektrischen Achsantriebs 1 der zweiten Hinterachse 2 ist über die Schalteinrichtung 16 gemäß den Ausführungen im Zusammenhang mit der Ausführungsform von Figur 4C mechanisch mit dem weiteren Abtrieb 14.1 des elektrischen Achsantriebs 1 der ersten Hinterachse 2 wirkverbindbar.

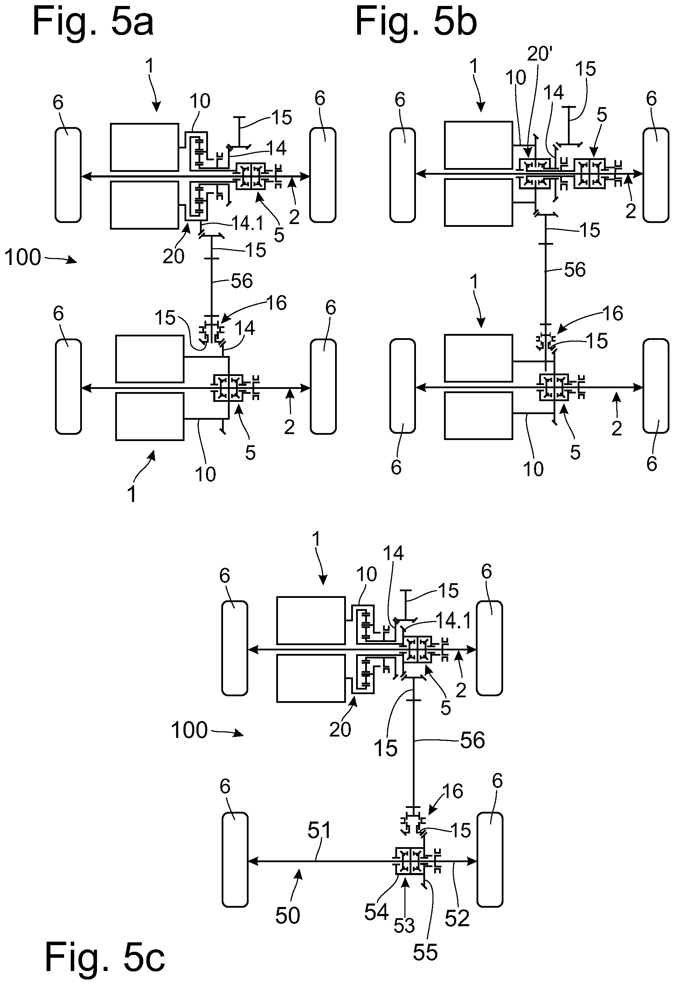

Figur 5A zeigt eine elektrische Antriebsanordnung 100 gemäß einer weiteren Ausführungsform der vorliegenden Erfindung. Die in Figur 5A gezeigte Antriebsanordnung 100 ist eine Hinterradantriebsanordnung mit einer ersten Hinterachse 2 und einer zweiten Hinterachse 2. Dabei ist der elektrische Achsantrieb 1 der ersten Hinterachse 2 gemäß der Ausführungsform von Figur 1B oder Figur 2B ausgebildet. Über den Abtrieb 14 kann eine nicht gezeigte Vorderachse an den elektrischen Achsantrieb 1 der ersten Hinterachse 2 angebunden werden. Die zweite Hinterachse 2 weist einen eigenen elektrischen Achsantrieb 1 auf, der in der vorliegenden Ausführungsform gemäß der Ausführungsform von Figur 1A oder 2A ausgebildet ist. Der Abtrieb 14 des elektrischen Achsantriebs 1 der zweiten Hinterachse 2 ist gemäß den Ausführungen in Verbindung mit den Ausführungsformen von Figur 3C oder 4D über eine Schalteinrichtung 16 an den elektrischen Achsantrieb 1 der ersten Hinterachse 2 mechanisch anbindbar. In der vorliegenden Ausführungsform ist dabei an dem Getriebeausgang 10 des elektrischen Achsantriebs 1 der ersten Hinterachse 2 ein weiterer Abtrieb 14.1 vorgesehen. Mit dem weiteren Abtrieb 14.1 kämmt ein Kegelrad 15, das über die Schalteinrichtung 16 und die Welle 56 mit dem weiteren Kegelrad 15 drehfest verbindbar ist. Das weitere Kegelrad 15 kämmt wiederum mit dem Abtrieb 14 des elektrischen Achsantriebs 1 der zweiten Hinterachse 2.

Figur 5B zeigt eine Antriebsanordnung 100 gemäß einer weiteren Ausführungsform der vorliegenden Erfindung. Die Antriebsanordnung 100 gemäß der Ausführungsform von Figur 5B ist entsprechend der Antriebsanordnung 100 der Ausführungsform von Figur 5A als Hinterradantriebsanordnung ausgebildet. Die erste elektrische Hinterachse 2 und die zweite elektrische Hinterachse 2 weisen dabei jeweils eine eigene elektrische Antriebseinrichtung auf. Dabei sind der elektrische Achsantrieb 1 für die erste Hinterachse 2 und der elektrische Achsantrieb 1 für die zweite Hinterachse 2 entsprechend den Achsantrieben 1 für die erste und zweite Hinterachse aus der Ausführungsform von Figur 4D ausgebildet. Es wird auf die entsprechenden Ausführungen in Verbindung mit dieser Ausführungsform verwiesen. Entsprechend der Ausführungsform von Figur 4D kann ferner an den Abtrieb 14 des elektrischen Achsantriebs 1 der ersten Hinterachse 2 eine Vorderachse mechanisch angebunden werden.

Figur 5C zeigt eine elektrische Antriebsanordnung 100 gemäß einer weiteren Ausführungsform der vorliegenden Erfindung. Die Antriebsanordnung 100 der Ausführungsform von Figur 5C ist eine Hinterradantriebsanordnung und umfasst eine erste Achse 2 mit einem eigenen elektrischen Achsantrieb 1. Die elektrische Antriebsanordnung 1 ist zum Antreiben einer ersten Hinterachse 2 ausgebildet. Der elektrische Achsantrieb 1 für die erste Hinterachse 2 sowie die zweite Hinterachse 50 sind entsprechend der Ausführungen im Zusammenhang mit der Ausführungsform von Figur 4B ausgebildet und über eine Schalteinrichtung 16 mechanisch miteinander koppelbar. Es wird auf die entsprechenden Ausführungen im Zusammenhang mit dieser Ausführungsform verwiesen. Ferner ist mit dem Abtrieb 14 des elektrischen Achsantriebs 1 der ersten Hinterachse 2 über ein Kegelrad 15 eine nicht gezeigte Vorderachse mechanisch wirkverbindbar.

### Bezugszeichen

- 1: elektrischer Achsantrieb
- 2: Achse
- 3,4: Achsabschnitt
- 5: Querdifferential
- 6: Rad
- 7: elektrische Antriebseinrichtung
- 7.1, 7.2: Elektromotor
- 8, 8': Getriebe
- 9, 9.1, 9.2: Getriebeeingang
- 10: Getriebeausgang
- 11, 26': Differentialkorb
- 12, 12': Planetenradsatz
- 13, 13': Schalteinrichtung
- 14, 14.1: Abtrieb
- 15: Kegelritzel
- 16: Schalteinrichtung
- 17, 25, 25': Differentialsperre
- 20, 20': Längsdifferential
- 21: Sonnenrad
- 22: Planetenträger
- 23: Planetenrad
- 24: Hohlrad
- 26: Planetenstufe
- 27', 28', 29': Differentialkegelrad
- 50: zweite, dritte Achse
- 51, 52: Achsabschnitt zweite, dritte Achse
- 53: Querdifferential zweite, dritte Achse
- 54: Differentialkorb zweite, dritte Achse
- 55: Tellerrad zweite, dritte Achse
- 56: Welle
- 100: elektrische Antriebsanordnung

## Patentansprüche

1. Elektrischer Achsantrieb (1) für ein Fahrzeug mit einer ersten Achse (2) zum Anbringen von Rädern (6), einer elektrischen Antriebseinrichtung (7; 7.1, 7.2) zum Antreiben der ersten Achse (2) und einem Abtrieb (14) zum mechanischen Anbinden einer zweiten Achse (2; 50) zum Anbringen von Rädern (6), wobei der elektrische Achsantrieb (1) ausgebildet ist, um mit der elektrischen Antriebseinrichtung (7; 7.1, 7.2) neben der ersten Achse (2) auch die zweite Achse (2; 50) über den Abtrieb (14) anzutreiben.

2. Elektrischer Achsantrieb (1) nach Anspruch 1, **dadurch gekennzeichnet, dass** die erste Achse (2) einen ersten Achsabschnitt (3) zum Anbringen eines ersten Rads (6), einen zweiten Achsabschnitt (4) zum Anbringen eines zweiten Rads (6) und ein mit dem ersten und zweiten Achsabschnitt (3, 4) mechanisch wirkverbundenes Querdifferential (5) zum Drehzahlausgleich zwischen den Achsabschnitten (3, 4) aufweist.

3. Elektrischer Achsantrieb (1) nach Anspruch 1 oder 2, **dadurch gekennzeichnet, dass** der elektrische Achsantrieb (1) ein Getriebe (8; 8') mit mehreren Gängen zum Antreiben der ersten (2) und zweiten Achse (2; 50) mit unterschiedlichen Übersetzungsverhältnissen aufweist.

4. Elektrischer Achsantrieb (1) nach einem der vorhergehenden Ansprüche, **dadurch gekennzeichnet, dass** die elektrische Antriebseinrichtung einen einzigen (7) oder mehrere elektrische Motoren (7.1, 7.2) zum Antreiben der ersten und zweiten Achse (2, 2; 50) aufweist.

5. Elektrischer Achsantrieb (1) nach einem der vorhergehenden Ansprüche, **dadurch gekennzeichnet, dass** der Achsantrieb (1) einen weiteren Abtrieb (14.1) zum mechanischen Anbinden einer dritten Achse (2; 50) zum Anbringen von Rädern (6) aufweist, wobei der elektrische Achsantrieb (1) ausgebildet ist, um mit der elektrischen Antriebseinrichtung (7; 7.1, 7.2) der ersten Achse (2) auch die dritte Achse (2; 50) über den weiteren Abtrieb (14.1) anzutreiben.

6. Elektrischer Achsantrieb (1) nach einem der vorhergehenden Ansprüche, **dadurch gekennzeichnet, dass** der elektrische Achsantrieb (1) ein Längsdifferential (20; 20') zum Drehzahlausgleich zwischen der ersten Achse (2) und der zweiten Achse (2; 50) aufweist.

7. Elektrischer Achsantrieb (1) nach Anspruch 6, **dadurch gekennzeichnet, dass** das Längsdifferential ausgebildet ist als zumindest eines von einem Planetenraddifferential (20) und einem Kegelraddifferential (20').

8. Elektrische Antriebsanordnung (100) mit einem elektrischen Achsantrieb (1) nach Anspruch 6 oder 7 und einer zweiten Achse (2; 50), wobei die zweite Achse (2; 50) über die elektrische Antriebseinrichtung (7; 7.1, 7.2), das Längsdifferential (20; 20') und den Abtrieb (14) der ersten Achse (2) antreibbar ist.

9. Elektrische Antriebsanordnung (100) mit zwei elektrischen Achsantrieben (1) nach einem der Ansprüche 1 bis 5, wobei ein Drehmoment zwischen Abtrieben (14) der Achsantriebe (1) übertragbar ist.

10. Fahrzeug mit einer elektrischen Antriebsanordnung (100) nach einem der Ansprüche 8 und 9.
